# EUROPÄISCHE PATENTSCHRIFT

(11) **EP 1 452 289 B1**
(45) Veröffentlichungstag und Bekanntmachung des Hinweises auf die Patenterteilung: **29.11.2006**
(21) Anmeldenummer: 03004487.9
(22) Anmeldetag: 28.02.2003
(51) Int. Cl.: B29B 7/74, B05B 7/04

(54) **Spritzgerät**
Spraying apparatus
Appareil de projection de fluide

(43) Veröffentlichungstag der Anmeldung: 01.09.2004
(73) Patentinhaber: Seyrl, Günter, 4491 Niederneukirchen (AT)
(72) Erfinder: Seyrl, Günter, 4491 Niederneukirchen (AT)
(74) Vertreter: Gesthuysen, von Rohr & Eggert

(56) Entgegenhaltungen:
- EP-A- 0 087 029
- GB-A- 1 311 467
- US-A- 4 067 479
- US-A- 5 810 254

## Beschreibung

Die Erfindung betrifft ein Spritzgerät zum Aufbringen von mehrkomponentigen, vorzugsweise zweikomponentigen Medien auf einen Untergrund im Spritzverfahren gemäß Anspruch 1, eine Spritzanlage gemäß Anspruch 10 sowie eine Verwendung des obigen Spritzgerätes und/oder der obigen Spritzanlage gemäß Anspruch 14. Die Erfindung wird vorliegend anhand eines Zweikomponenten-Baustoffes auf Bitumenbasis dargestellt, grundsätzlich ist die Erfindung allerdings auf alle mehrkomponentigen, flüssigen oder dickflüssigen Medien anwendbar.

Der Baustoff Bitumen bewährt sich unter anderem neben kunststoffbasierten Baustoffen seit vielen Jahren im Straßenbau, im Wasserbau, zur Abdichtung im Hoch- und Tiefbau, insbesondere bei der Abdichtung erdberührter Bauteile, sowie bei einer Vielzahl industrieller Anwendungen. Eine weit verbreitete Verarbeitungsform ist heute das Verlegen von Bitumen- bzw. von Polymerbitumen-Abdichtungsbahnen.

Problematisch bei der oben beschriebenen Verarbeitungsweise ist die Tatsache, daß ein hinreichender Verbund zum Untergrund über den gesamten abzudichtenden Bereich nur selten möglich ist. Die Folge ist ein Wandern von Feuchtigkeit unter der Bitumenbahn, so daß eine Lokalisierung einer feuchten Stelle Probleme bereitet. Die Reparatur gestaltet sich entsprechend schwierig und ist zeit- und kostenintensiv. Dieses Problem stellt sich insbesondere auf unebenen Bodenflächen. Ein weiterer Nachteil besteht darin, daß das Aufflämmen der Bitumenbahnen insbesondere bei beengten Arbeitsverhältnissen, beispielsweise in engen Baugruben, mühsam und zeitintensiv ist. Schließlich führt das hohe Gewicht der Bitumenrollen zu einer beschwerlichen Handhabung.

Eine weitere Verarbeitungsmöglichkeit ist das Spachteln von Bitumen-Dickbeschichtungen. Nachteilig ist hier das aufwendige Einrühren der jeweiligen Pulverkomponente, sowie das mühsame Aufbringen im Spachtelverfahren. Dieses Verfahren ist in besonderer Weise abhängig von der Oberfläche des abzudichtenden Bereichs. Ferner ist die Aushärtezeit dieser spachtelbaren Bitumen-Dickbeschichtungen vom Aufbringen bis zur Regenfestigkeit vergleichsweise lang.

Vorteilhaft ist das Aufbringen des jeweiligen Baustoffes nach einer weiteren Verarbeitungsaltemative im Spritzverfahren. Hierfür sind beispielsweise Einkomponenten- und Zweikomponenten-Bitumenbeschichtungen bekannt und geeignet. Hierbei handelt es sich beispielsweise um wäßrige Bitumen-Polymer-Emulsionen, die gegebenenfalls zur Beschleunigung des Abbindens zusammen mit einem Reaktionsmittel auf den Untergrund aufgebracht werden.

Die Vorteile des spritzweisen Aufbringens von Baustoffen bestehen unter anderem darin, daß ein unebener Untergrund kaum Einfluß auf die Verarbeitungsqualität hat, daß Hindernisse wie verlegte Installationsleitungen umspritzt werden können, daß eine vollflächige Verbindung mit dem Untergrund entsteht, daß Hochzüge zu einer Wand in einem einzigen Arbeitsgang mitgespritzt werden können und daß die zum Aufbringen benötigte Zeit reduziert wird. Ferner ist ein gutes Aushärteverhalten des aufgespritzten Baustoffes auch bei hohen Schichtstärken gewährleistet.

Zur Durchführung des oben genannten spritzweisen Aufbringens ist ein Spritzgerät bekannt, von dem die vorliegende Erfindung ausgeht. Das bekannte Spritzgerät ist nach Art einer Spritzpistole ausgestaltet, die zwei voneinander getrennte Medienauslässe aufweist. Über den einen Medienauslaß ist das spritzweise Ausbringen von flüssigem Bitumen vorgesehen. Über den anderen Medienauslaß wird ein Reaktionsmittel direkt in den Sprühstrahl des Bitumens eingesprüht. Das resultierende Gemisch trifft auf den abzudichtenden Bereich und härtet in kurzer Zeit aus. Vorteilhaft ist bei dieser Ausgestaltung des Spritzgeräts zunächst die einfache Konstruktion.

Nachteilig ist bei dem bekannten Spritzgerät die Tatsache, daß Prozeßparameter, insbesondere das Mischungsverhältnis zwischen Bitumen einerseits und Reaktionsmittel andererseits, nur schwer einstellbar ist. Ferner ist die Vermischung der beiden Medienkomponenten nicht homogen und je nach Anwendungsfall unzureichend.

Die US 5 810 254 A beschreibt eine Spritzpistole zum Auftragen von Polymermaterialien, bei der zunächst zwei flüssige und reaktive Polymerkomponenten vermischt werden, so daß eine Reaktion zwischen den Polymerkomponenten hervorgerufen wird. Die Vermischung der Polymerkomponenten erfolgt durch eine statische Mischvorrichtung. Die Reinigung der Spritzpistole erfolgt mittels einer Luftdruckspülung.

Weiterhin betrifft die GB 1 311 467 eine Vorrichtung zur Vermischung von mindestens zwei Gasen. Spezielle Maßnahmen zur Verbesserung der Reinigungsfähigkeit sind in dieser Vorrichtung nicht vorgesehen.

Die EP 0 087 029 A1 betrifft eine Vorrichtung zum Mischen von Dentalmassen, wobei die jeweiligen Komponenten der Dentalmasse mit einem in einer Mischkammer beweglich angeordneten Rührer verrührt werden und nachfolgend über eine Auslaßöffnung ausgeschoben werden können, wobei die Auslaßöffnung vorzugsweise nach unten gerichtet ist, so daß die gemischte Dentalmasse unmittelbar in einen entsprechenden Abdrucklöffel eingeführt werden kann.

Der vorliegenden Erfindung liegt das Problem zugrunde, das bekannte Spritzgerät derart auszugestalten und weiterzubilden, daß eine optimale Vermischung der Medienkomponenten und eine einfache und genaue Einstellung des Mischungsverhältnisses zwischen den Medienkomponenten bei einfacher Wartbarkeit gewährleistet wird.

Das vorliegende Problem wird bei einem Spritzgerät gemäß dem Oberbegriff von Anspruch 1 mit den Merkmalen des kennzeichnenden Teils von Anspruch 1 gelöst. Weitere, vorteilhafte Ausgestaltungen sind Gegenstand der diesbezüglichen Unteransprüche.

Wesentlich ist zunächst, daß das Spritzgerät eine Mischkammer aufweist, in der die Medienkomponenten in vordefinierter Weise und reproduzierbar miteinander mischbar sind. Bei Druckbeaufschlagung der Medieneinlässe jeweils mit einer Medienkomponente wird die Mischkammer mit den Medienkomponenten durchströmt, wodurch die Vermischung der Medienkomponenten bewirkt wird. Die vermischten Medienkomponenten werden schließlich über den Medienauslaß ausgebracht

Besonders vorteilhaft ist die Tatsache, daß mit der Mischkammer eine weitgehend homogene Vermischung der Medienkomponenten erreichbar ist und daß ferner die Variation des Mischungsverhältnisses mit geringem Aufwand möglich ist, wie im folgenden noch gezeigt wird.

Es gibt eine Vielzahl von Möglichkeiten, die vorliegende Lehre auszugestalten. Vorteilhafte Weiterbildungen ergeben sich aus den Unteransprüchen.

Die Anordnung einer Luftaustrittsdüse am Medienauslaß ermöglicht nicht nur das spritzweise Ausbringen des Gemisches, sondern bringt auch eine weitere Vermischung der Medienkomponenten mit sich.

Die weiter bevorzugte Ausgestaltung gemäß Anspruch 2 bis 4 führt zu einer besonders guten Vermischung der Medienkomponenten durch die Mischwendel. Die besonders bevorzugte Ausgestaltung gemäß Anspruch 4 führt zur besonders einfachen Entnehmbarkeit der Mischwendel zu Reinigungszwecken oder zum Austausch.

Nach einer weiteren Lehre, der eigenständige Bedeutung zukommt, wird das oben genannten Problem bei einer Spritzanlage gemäß dem Oberbegriff von Anspruch 10 mit den Merkmalen des kennzeichnenden Teils von Anspruch 10 gelöst.

Es handelt sich nach dieser weiteren Lehre um eine Spritzanlage mit dem oben genannten Spritzgerät sowie mit einer Pumpanordnung, mittels derer das Spritzgerät mit den Medienkomponenten druckbeaufschlagbar ist. Auf die obigen Ausführungen zum Spritzgerät darf verwiesen werden.

Nach einer weiteren Lehre, der ebenfalls eigenständige Bedeutung zukommt, wird das oben genannte Problem durch die Verwendung des oben genannten Spritzgeräts und/oder der oben genannten Spritzanlage mit den Merkmalen von Anspruch 13 gelöst. Auch hier darf auf die obigen Ausführungen verwiesen werden.

Im folgenden wird die Erfindung anhand einer lediglich ein Ausführungsbeispiel darstellenden Zeichnung näher erläutert. In der Zeichnung zeigt
- Fig. 1: eine Seitenansicht eines Spritzgerätes im Schnitt,
- Fig. 2: das Spritzgerät aus Fig. 1 von oben im Schnitt.

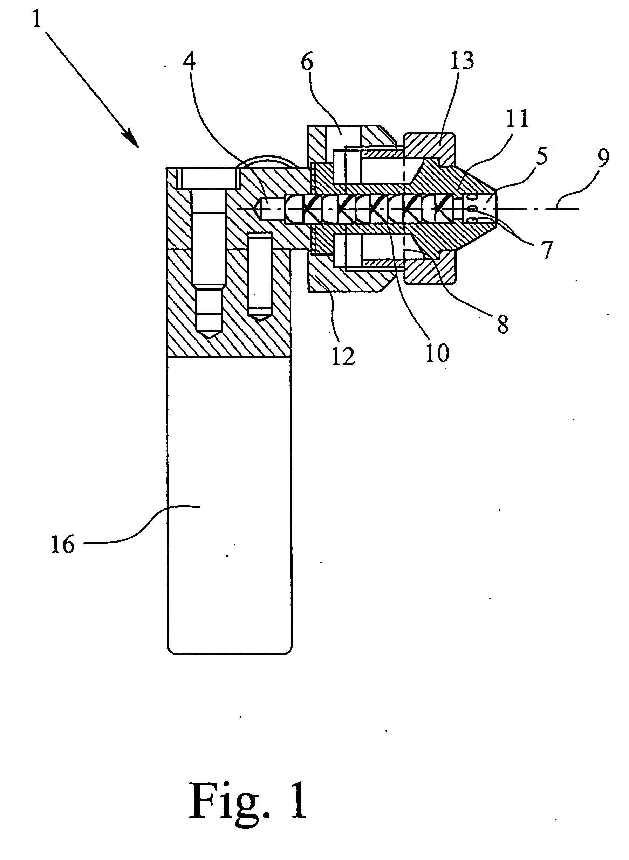

Fig. 1 zeigt ein Spritzgerät 1 zum Aufbringen von mehrkomponentigen Medien auf einen Untergrund im Spritzverfahren. Es spielt vorliegend keine Rolle, wie viele Komponenten bei der Verarbeitung des jeweiligen Mediums zusammenzuführen sind. Vorzugsweise handelt es sich um ein zweikomponentiges Medium. Beispiele für ein derartiges Medium werden im folgenden noch gegeben.

Das in der Zeichnung dargestellte Ausführungsbeispiel weist zwei Medieneinlässe 2, 3 für die einzelnen Medienkomponenten des aufzubringenden Mediums auf. Die Medieneinlässe 2, 3 können als Gewindeflansch oder nach Art eines Schnellverschlusses ausgestaltet sein. Hierfür bietet der Stand der Technik eine Vielzahl von Möglichkeiten.

Die über die Medieneinlässe 2, 3 dem Spritzgerät 1 zugeführten Medienkomponenten sind mittels des Spritzgerätes 1 mischbar und im vermischten Zustand auf den Untergrund aufbringbar. Hierfür weist das Spritzgerät 1 eine Mischkammer 4 auf, die mit den Medieneinlässen 2, 3 kommuniziert. Mit "kommunizieren" ist vorliegend gemeint, daß die Möglichkeit besteht, daß eine Medienkomponente von einem Medieneinlaß 2, 3 zur Mischkammer 4 gelangt. Dies kann über Verbindungsleitungen, Ventile oder dergleichen erfolgen, wie im folgenden noch gezeigt wird. Beim Betrieb des Spritzgeräts 1 werden die beiden Medieneinlässe 2, 3 jeweils mit einer Medienkomponente druckbeaufschlagt (Spritzdruck zwischen 5 und 120 bar), so daß die beiden Medienkomponenten die Mischkammer 4 durchströmen, wodurch die beiden Medienkomponenten miteinander vermischt werden und schließlich über den Medienauslaß 5 ausgebracht werden.

Bei der Auslegung des Spritzgeräts 1 für Medien mit mehr als zwei Komponenten sind entsprechend mehrere Medieneinlässe 2, 3 vorzusehen, über die die zusätzlichen Medienkomponenten in die Mischkammer 4 geleitet werden können. Diese Überlegung gilt für alle noch zu beschreibenden Ausführungsbeispiele.

Da es sich bei den im allgemeinen Teil der Beschreibung angesprochenen Baustoffen in der Regel um Medien mit vergleichsweise hoher Viskosität handelt, ist das spritzweise Ausbringen allein durch die Druckbeaufschlagung der einzelnen Medienkomponenten nur mit hohem Druck möglich. Daher ist es vorgesehen, das aus dem Medienauslaß 5 austretende Gemisch mit zusätzlicher Druckluft zu beaufschlagen. Hierfür weist das Spritzgerät 1 einen Drucklufteinlaß 6 auf, der an einen Kompressor oder an eine ohnehin vorhandene Druckluftversorgung anschließbar ist. Der Medienauslaß 5 weist einige mit dem Drucklufteinlaß 6 verbundene Luftaustrittsdüsen 7 auf. Die Beaufschlagung des Drucklufteinlasses 6 und damit der Luftaustrittsdüsen 7 bewirkt beim gleichzeitigen Ausbringen des Gemisches aus dem Medienauslaß 5 das spritzweise Ausbringen des Gemisches. Im Ergebnis kann die Druckbeaufschlagung der Medieneinlässe 2, 3 mit vergleichsweise geringem Druck erfolgen, da die Beschleunigung des Gemisches durch die aus den Luftaustrittsdüsen 7 austretende Druckluft erfolgt.

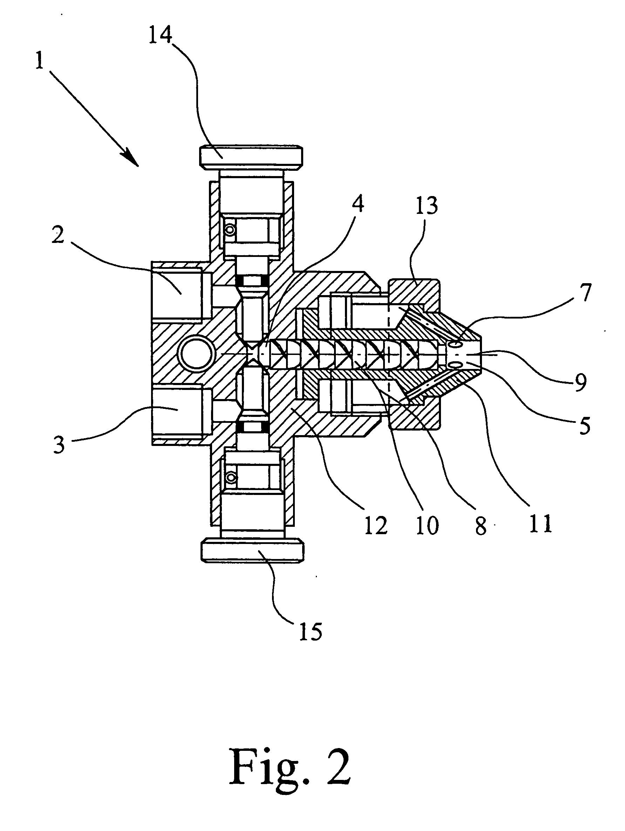

Für das oben beschriebene spritzweise Ausbringen des Gemisches kommt der Ausgestaltung der Luftaustrittsdüsen 7 besondere Bedeutung zu. Vorliegend ist es so, daß die Luftaustrittsdüsen 7 radialsymmetrisch um den Medienauslaß 5 angeordnet sind. Die aus den Luftaustrittsdüsen 7 austretenden Luftstrahle schneiden sich vorzugsweise in einem einzigen "Brennpunkt". Je nach Anwendungsfall können auch andere Anordnungen der Luftaustrittsdüsen 7 vorgesehen werden, beispielsweise ist auch die Anordnung einer einzigen radial umlaufenden Luftaustrittsdüse 7 denkbar. Fig. 2 läßt sich entnehmen, daß die Druckluft über den Drucklufteinlaß 6 in eine ringförmige Ausformung 8 und von dort über die Luftaustrittsdüsen 7 in den Bereich des Medienauslasses 5 gelangt.

Durch die geeignete Ausgestaltung der Luftaustrittsdüsen 7 ist eine feine Zerstäubung des Mediums möglich, so daß sich im Ergebnis ein gleichmäßiges Spritzbild an der zu besprühenden Oberfläche ergibt.

In besonders bevorzugter Ausgestaltung weist die Mischkammer 4 eine um eine Längsachse 9 drehbare Mischwendel 10 auf. Die Mischwendel 10 ist derart ausgestaltet, daß die Durchströmung der Mischkammer 4 die Drehung der Mischwendel 10 um ihre Längsachse 9 und damit ein homogenes Vermischen der Medienkomponenten bewirkt. In bevorzugter Ausgestaltung ist die Mischwendel 10 schraubenförmig oder aber propellerförmig ausgestaltet.

Die Mischwendel 10 ist in weiterer bevorzugter Ausgestaltung aus Kunststoff ausgestaltet. Es sind aber auch weitere Materialien denkbar, beispielsweise Teflon oder Metalle. Zum Reinigen ist es besonders vorteilhaft, wenn die Mischwendel 10, wie in der Zeichnung dargestellt, lediglich in die Mischkammer 4 eingelegt ist. Es kann aber auch sein, daß die Mischwendel 10 mit aus dem Stand der Technik bekannten Mitteln befestigt bzw. gelagert ist.

Besondere Bedeutung für die Wartung bzw. Reinigung des Spritzgeräts 1 kommt vorliegend dem strukturellen Aufbau des Spritzgeräts 1 zu. Das Spritzgerät 1 weist einen Einsatz 11 auf, der mit dem Spritzgerät 1 im übrigen trennbar verbunden ist. Das Spritzgerät 1 im übrigen wird nachfolgend als Gehäuse 12 bezeichnet. Im dargestellten und insoweit bevorzugten Ausführungsbeispiel ist der Einsatz 11 in das Gehäuse 12 einlegbar und durch eine Überwurfmutter 13 am Gehäuse 12 fixierbar. Der Einsatz 11 weist vorliegend einen Teil der Mischkammer 4 auf und nimmt damit im montierten Zustand zumindest einen Teil der Mischwendel 10 auf. Ferner weist der Einsatz 11 den Medienauslaß 5 auf. Für die Entnehmbarkeit bzw. die Austauschbarkeit der Mischwendel 10 ist es vorteilhaft, daß der Einsatz 11 einerseits und die Mischwendel 10 andererseits derart ausgestaltet sind, daß die vom Einsatz 11 zumindest teilweise aufgenommene Mischwendel 10 bei demontiertem Einsatz 11 zumindest teilweise entlang ihrer Längsachse 9 über den Einsatz 11 übersteht.

Nach einer Benutzung des Spritzgeräts 1 und anschließendem "Spülen" der Mischkammer 4 bzw. der Mischwendel 10 mit der ersten Medienkomponente wird der Einsatz 11 nach dem Lösen der Überwurfmutter 13 vom Gehäuse 12 demontiert, wobei der in Fig. 1 linke äußere Bereich der Mischwendel 10 über den Einsatz 11 übersteht. Damit ist die Mischwendel 10 ohne weiteres aus dem Einsatz 11 herausziehbar. Die Mischwendel 10 sowie der Einsatz 11 können dann bequem gereinigt werden.

Bei der einfachen Entnehmbarkeit der Mischwendel 10 ist zu berücksichtigen, daß mit der Entnahme der Mischwendel 10 aus dem Einsatz 11 gleichzeitig die Reinigung der Mischkammer 4 erfolgt. Damit wird dem Verkleben der Mischkammer 4 auf einfache Weise entgegengewirkt.

Besondere Bedeutung kommt ferner der Dimensionierung und der Anordnung der Mischkammer 4 im Spritzgerät 1 zu. Vorzugsweise ist die Mischkammer 4 derart ausgestaltet, daß der Strömungsweg der Medienkomponenten in der Mischkammer 4, in der resultierenden Strömungsrichtung gesehen, möglichst kurz bemessen ist. Die resultierende Strömungsrichtung ergibt sich dabei aus dem resultierenden Geschwindigkeitsvektor der Strömung der Medienkomponenten, die beispielsweise spiralförmig verläuft.

Die obige konstruktive Anweisung, den Strömungsweg möglichst kurz zu bemessen, ist im Hinblick auf die Reaktivität des Mediums zu sehen. Mit einem möglichst kurzen Strömungsweg soll vermieden werden, daß das Aushärten in unerwünschter Weise innerhalb der Mischkammer 4 erfolgt und diese verklebt. Insgesamt soll also auch die Zeit beginnend vom Eintritt der Medienkomponenten in die Medieneinlässe 2, 3 bis zum Ausbringen des Gemisches aus dem Medienauslaß 5 möglichst kurz sein, um wiederum das oben genannte Aushärten innerhalb des Spritzgeräts 1 zu vermeiden.

Eine weitere bevorzugte Maßnahme zur Vermeidung des oben beschriebenen Aushärtens innerhalb des Spritzgeräts besteht darin, die Mischkammer 4 möglichst nahe am Medienauslaß 5 und/oder an den Medieneinlässen 2, 3 anzuordnen. Lange Verbindungswege sollen hier möglichst vermieden werden. In besonders bevorzugter Ausgestaltung ist die Mischkammer 4 unmittelbar am Medienauslaß 5 und/oder an den Medieneinlässen 2, 3 angeordnet.

Im dargestellten und insoweit bevorzugten Ausführungsbeispiel ist der Medienauslaß 5 als im wesentlich kreisförmige Öffnung ausgestaltet. Es kann in bevorzugter Ausgestaltung aber auch vorgesehen werden, daß der Medienauslaß 5 als Spritzdüse ausgestaltet ist, die eine Beeinflussung des Spritzverhaltens ermöglicht. In der Spritzdüse sind dann die oben genannten Luftaustrittsdüsen 7 angeordnet.

Um das Mischungsverhältnis der Medienkomponenten einstellen zu können, ist in weiterer vorteilhafter Ausgestaltung zwischen dem Medieneinlaß 2, 3 und der Mischkammer 4 ein vorzugsweise stufenlos einstellbares Ventil 14, 15 angeordnet. Das Ventil 14, 15 ist also in den Weg der Medienkomponenten vom Medieneinlaß 2, 3 zur Mischkammer 4 geschaltet. Wie in der Zeichnung dargestellt, kann jedem Medieneinlaß 2, 3 ein Ventil 14, 15 zugeordnet sein. Je nach Anwendungsfall und bei mehr als zwei Medieneinlässen 2, 3 kann es aber auch vorteilhaft sein, daß ein Ventil 14, 15 mehreren Medieneinlässen 2, 3 zugeordnet ist.

In bevorzugter Ausgestaltung sind die Ventile 14, 15 zu Reinigungszwecken entfernbar. Beispielsweise kann vorgesehen sein, daß die Ventile 14, 15 über Fixierschrauben befestigt sind, und nach Entfernen der Fixierschrauben aus dem Gehäuse 12 herausgedreht werden können. Für die Ausgestaltung der Ventile 14, 15 sind aus dem Stand der Technik verschiedene Möglichkeiten bekannt, worauf verwiesen werden darf.

Zur bequemen Handhabbarkeit weist das Spritzgerät einen Handgriff 16 auf, der je nach Anwendung unterschiedlich ausgestaltet sein kann. Es ist auch denkbar, verschiedene Handgriffe 16 vorzusehen, die über eine Schraubverbindung oder dergleichen austauschbar sind.

Es darf darauf hingewiesen werden, daß das in der Zeichnung dargestellte und insoweit bevorzugte Spritzgerät 1 nahezu wartungsfrei ist. Das einzige bewegliche Teil ist die Mischwendel 10, die ohne weiteres austauschbar ist. Ferner sind die Anzahl von Bohrungen auf ein Minimum begrenzt, was nicht nur für den Betrieb vorteilhaft ist (Vermeidung von ungewünschten Lufteinlässen, von Verschmutzungen etc.), sondern auch zu einer einfachen Fertigung des Spritzgeräts 1 führt.

Grundsätzlich ist das oben beschriebene Spritzgerät 1 für die Verarbeitung aller mehrkomponentigen flüssigen bzw. pumpbaren, insbesondere reaktiven Medien nutzbar. In bevorzugter Ausgestaltung sind diese Medien aus dem Baubereich, insbesondere Dichtmittel. Dabei kann die erste Medienkomponente vorzugsweise eine Bitumenemulsion und die zweite Medienkomponente eine hiermit reaktive Reaktionsflüssigkeit sein. Die Reaktionsflüssigkeit übernimmt hier die Funktion eines Beschleunigers, so daß das Aushärten des Mediums in kurzer Zeit erfolgt.

Das vorzugsweise eingesetzte Medium kann, wie beschrieben, insbesondere reaktiv sein, es härtet unter allen Umständen auch unter Luftabschluß, hoher Luftfeuchtigkeit und niederen Temperaturen zu 100 % aus. Aus diesem Grund ist die Dimensionierung des Spritzgeräts, insbesondere was den Strömungsweg der Medienkomponenten angeht, auf die genannte Reaktivität des Mediums anzupassen, um ein Aushärten innerhalb der Spritzpistole 1 zu vermeiden.

Beide Medienkomponenten des vorzugsweise eingesetzten Mediums sind vorzugsweise frei von Lösungsmittel. In bevorzugter Ausgestaltung handelt es sich bei dem obigen Medium um ein Produkt der Reaktiv-Asphaltserie der Firma Vialit Asphalt GmbH & Co. KG.

Das bevorzugte Mischungsverhältnis zwischen der Bitumenemulsion und der Reaktionsflüssigkeit liegt vorzugsweise zwischen 100:5 bis 100:20, je nach Anwendungsfall sowie Witterung und Umgebungstemperatur.

Unter Verwendung des obigen Mediums kann mit dem beschriebenen Spritzgerät 1 ein Auftrag von 2 bis 4 mm oder mehr Schichtstärke in einem Arbeitsgang erfolgen. Je nach Umgebungsbedingungen sind aber auch Schichtstärken bis 6 mm oder sogar mehr möglich.

Es darf darauf hingewiesen werden, daß auch weitere Medien aus dem Baubereich mit dem obigen Spritzgerät 1 in vorteilhafter Weise zur Anwendung kommen können. Ein Beispiel hierfür sind beispielsweise kunststoffvergütete Abdichtungsmassen, Abdichtmassen auf Kunststoffbasis oder dergleichen.

Bei dem Untergrund, auf den das mehrkomponentige Medium aufzubringen ist, handelt es sich vorzugsweise um Mauerwerk-, Betonuntergrund oder dergleichen, wobei der Untergrund von Wand-, Beton- und/oder Deckenflächen, insbesondere aus dem Baubereich, gebildet sein kann. Der Untergrund kann alle denkbaren Ausgestaltungen ebener oder unebener Flächen, Nuten, Verbindungsstellen oder dergleichen aufweisen. Insbesondere kann es sich bei dem Untergrund um erdberührte Bauteile im Hoch-, Tief- und Ingenieurbau handeln.

Nach einer weiteren Lehre, der eigenständige Bedeutung zukommt, wird eine Spritzanlage beansprucht, die ein Spritzgerät 1 sowie eine nicht weiter dargestellte Pumpanordnung aufweist. Die Pumpanordnung dient zur Druckbeaufschlagung des Spritzgeräts 1, also der Medieneinlässe 2, 3, mit den Medienkomponenten. Für die möglichen Ausgestaltungen des Spritzgeräts 1 darf auf die obigen Ausführungen verwiesen werden.

In bevorzugter Ausgestaltung ist es vorgesehen, daß die Medieneinlässe 2, 3 des Spritzgeräts 1 mittels der Pumpanordnung jeweils mit einer unterschiedlichen Medienkomponente und mit einem unterschiedlichen Druck beaufschlagbar sind. Damit ist das Mischungsverhältnis der Medienkomponenten einerseits durch die unterschiedliche Druckbeaufschlagung der Medieneinlässe 2, 3 und andererseits durch die Verstellung der Ventile 14, 15, sofern diese vorhanden sind, einstellbar. Dadurch ergibt sich eine besonders hohe Flexibilität bei der Einstellung der Prozeßparameter.

Besonders vorteilhaft ist es, wenn die Pumpanordnung mehrere Pumpen aufweist, die jeweils einen Medieneinlaß 2, 3 mit der jeweiligen Medienkomponente druckbeaufschlagen. Das in der Zeichnung dargestellte und insoweit bevorzugte Spritzgerät 1 weist zwei Medieneinlässe 2, 3 für zwei Medienkomponenten auf, so daß entsprechend vorzugsweise zwei Pumpen vorgesehen sind. Zur Bestimmung des Mischungsverhältnisses der beiden Medienkomponenten ist es vorzugsweise vorgesehen, daß die Pumpen miteinander gekoppelt sind. Dies kann mechanisch, vorzugsweise über Koppelelemente oder über ein Getriebe, erfolgen. Möglich ist es aber auch, die Pumpen elektrisch miteinander zu koppeln, was zu einem geringen mechanischen Aufwand führt. Vorzugsweise ist die Kopplung verstellbar ausgestaltet, so daß eine Verbänderung des Mischungsverhältnisses über die Verstellung der Kopplung möglich ist.

Nach einer weiteren Lehre, der ebenfalls eigenständige Bedeutung zukommt, wird die Verwendung des beschriebenen Spritzgeräts 1 und/oder der beschriebenen Spritzanlage zum Aufbringen von mehrkomponentigen Medien beansprucht. Wesentlich ist dabei, daß neben der Ausgestaltung des Spritzgeräts 1 bzw. der Sprühanlage, wie oben beschrieben, eine erste Medienkomponente eine Bitumenemulsion sein und eine zweite Medienkomponente eine hiermit reaktive Reaktionsflüssigkeit sein kann. Der Untergrund ist in ebenfalls beschriebener Weise Mauerwerk, Betonuntergrund oder dergleichen.

## Patentansprüche

1. Spritzgerät (1) zum Aufbringen von mehrkomponentigen, vorzugsweise zweikomponentigen Medien auf einen Untergrund im Spritzverfahren, wobei das Spritzgerät (1) wenigstens zwei, vorzugsweise zwei Medieneinlässe (2, 3) für die einzelnen Medienkomponenten des aufzubringenden Mediums aufweist, wobei die Medienkomponenten mittels des Spritzgeräts (1) mischbar und im vermischten Zustand auf den Untergrund aufbringbar sind und wobei das Spritzgerät (1) eine Mischkammer (4) und einen Medienauslaß (5) aufweist und eine Druckbeaufschlagung der Medieneinlässe (2, 3) jeweils mit einer Medienkomponente die Durchströmung der Mischkammer (4) mit den Medienkomponenten und damit die Vermischung der Medienkomponenten und schließlich das Ausbringen des Gemisches über den Medienauslaß (5) bewirkt, wobei das Spritzgerät (1) einen Drucklufteinlaß (6) aufweist, der Medienauslaß (5) wenigstens eine mit dem Drucklufteinlaß (6) verbundene Luftaustrittsdüse (7) aufweist und die Beaufschlagung des Drucklufteinlasses (6) und damit der Luftaustrittsdüse (7) mit Druckluft beim Ausbringen des Gemisches aus dem Medienauslaß (5) das spritzweise Ausbringen des Gemisches bewirkt, **dadurch gekennzeichnet, daß** die Luftaustrittsdüse (7) in eine Auslaßleitung vor dem Medienauslaß (5) mündet.

2. Spritzgerät nach Anspruch 1, **dadurch gekennzeichnet, daß** die Mischkammer (4) eine um eine Längsachse (9) drehbare, vorzugsweise aus Kunststoff oder dergleichen ausgestaltete Mischwendel (10) aufweist und daß die Durchströmung der Mischkammer (4) die Drehung der Mischwendel (10) um ihre Längsachse (9) und damit ein Vermischen der Medienkomponenten bewirkt, vorzugsweise, daß die Mischwendel (10) in die Mischkammer (4) eingelegt ist.

3. Spritzgerät nach Anspruch 2, **dadurch gekennzeichnet, daß** das Spritzgerät (1) einen Einsatz (11) aufweist, daß der Einsatz (11) mit dem Spritzgerät (1) im übrigen trennbar verbunden ist, daß der Einsatz (11) zumindest einen Teil der Mischkammer (4) aufweist und damit im montierten Zustand zumindest einen Teil der Mischwendel (10) aufnimmt, vorzugsweise, daß der Einsatz (11) den Medienauslaß (5) aufweist.

4. Spritzgerät nach Anspruch 3, **dadurch gekennzeichnet, daß** der Einsatz (11) einerseits und die Mischwendel (10) andererseits derart ausgestaltet sind, daß die vom Einsatz (11) zumindest teilweise aufgenommene Mischwendel (10) bei demontiertem Einsatz (11) zumindest teilweise entlang ihrer Längsachse (9) über den Einsatz (11) übersteht.

5. Spritzgerät nach einem der vorhergehenden Ansprüche, **dadurch gekennzeichnet, daß** der Strömungsweg der Medienkomponenten in der Mischkammer (4), in der resultierenden Strömungsrichtung gesehen, in Abhängigkeit von der Reaktivität des Mediums zur Vermeidung des Aushärtens innerhalb der Mischkammer (4) möglichst kurz bemessen ist, vorzugsweise, daß die Mischkammer (4) möglichst nahe am Medienauslaß (5) und/oder an den Medieneinlässen (2, 3) angeordnet ist.

6. Spritzgerät nach einem der vorhergehenden Ansprüche, **dadurch gekennzeichnet, daß** der Medienauslaß (5) eine Spritzdüse zur Beeinflussung des Spritzverhaltens aufweist.

7. Spritzgerät nach einem der vorhergehenden Ansprüche, **dadurch gekennzeichnet, daß** zwischen dem Medieneinlaß (2, 3) und der Mischkammer (4) ein einstellbares Ventil (14, 15) angeordnet ist und daß damit das Mischungsverhältnis der Medienkomponenten einstellbar ist.

8. Spritzgerät nach einem der vorhergehenden Ansprüche, **dadurch gekennzeichnet, daß** eine erste Medienkomponente eine Bitumenemulsion ist und daß eine zweite Medienkomponente eine hiermit reaktive Reaktionsflüssigkeit ist.

9. Spritzgerät nach einem der vorhergehenden Ansprüche, **dadurch gekennzeichnet, daß** der Untergrund Mauerwerk-, Betonuntergrund oder dergleichen ist und daß der Untergrund vorzugsweise von Wand-, Boden- und/oder Deckenflächen, insbesondere aus dem Baubereich, gebildet wird.

10. Spritzanlage zum Aufbringen von mehrkomponentigen, vorzugsweise zweikomponentigen Medien auf einen Untergrund im Spritzverfahren, wobei die Spritzanlage ein Spritzgerät (1) und eine Pumpanordnung aufweist, wobei mittels der Pumpanordnung das Spritzgerät (1) mit den Medienkomponenten druckbeaufschlagbar ist,
**dadurch gekennzeichnet,**
**daß** das Spritzgerät (1) nach einem der vorhergehenden Ansprüche ausgestaltet ist.

11. Spritzanlage nach Anspruch 10, **dadurch gekennzeichnet, daß** die Medieneinlässe (2, 3) des Spritzgeräts (1) mittels der Pumpanordnung jeweils mit einer unterschiedlichen Medienkomponente und mit einem unterschiedlichen Druck beaufschlagbar sind.

12. Spritzanlage nach Anspruch 10 oder 11, **dadurch gekennzeichnet, daß** die Pumpanordnung mehrere, vorzugsweise zwei, Pumpen aufweist und/oder daß die Pumpen mechanisch, vorzugsweise über Koppelelemente oder über ein Getriebe, oder elektrisch miteinander gekoppelt sind.

13. Verwendung eines Spritzgeräts (1) nach einem der Ansprüche 1 bis 9 und/oder einer Spritzanlage nach einem der Ansprüche 10 bis 12 zum Aufbringen von mehrkomponentigen, vorzugsweise zweikomponentigen, insbesondere reaktiven Medien auf einen Untergrund im Spritzverfahren, insbesondere wobei eine erste Medienkomponente eine Bitumenemulsion ist und eine zweite Medienkomponente eine hiermit reaktive Reaktionsflüssigkeit ist und/oder insbesondere wobei der Untergrund Mauerwerk-, Betonuntergrund oder dergleichen ist und/oder insbesondere wobei der Untergrund vorzugsweise von Wand-, Boden- und/oder Deckenflächen, insbesondere aus dem Baubereich, gebildet wird.

## Claims

1. Spraying device (1) for applying multi-component, preferably two-component, media to a subbase using the spraying method, the spraying device (1) comprising at least two, preferably two, medium inlets (2, 3) for the individual medium components of the medium to be applied, the medium components being mixable and applicable in the mixed state to the subbase by means of the spraying device (1), and the spraying device (1) comprising a mixing chamber (4) and a medium outlet (5) and bringing about pressurization of the medium inlets (2, 3) in each case with a medium component, flowthrough of the mixing chamber (4) by the medium components and thus the mixing of the medium components and finally the discharge of the mixture via the medium outlet (5), the spraying device (1) comprising a compressed-air inlet (6), the medium outlet (5) comprising at least one air outlet nozzle (7) connected to the compressed-air inlet (6), and the pressurization of the compressed-air inlet (6) and thus of the air outlet nozzle (7) with compressed air during the discharge of the mixture from the medium outlet (5) bringing about the sprayed discharge of the mixture, **characterized in that** the air outlet nozzle (7) runs into an outlet line before the medium outlet (5).

2. Spraying device according to Claim 1, **characterized in that** the mixing chamber (4) comprises a mixing helix (10) which is rotatable about a longitudinal axis (9) and preferably made from plastic or the like, and **in that** the flowthrough of the mixing chamber (4) brings about the rotation of the mixing helix (10) about its longitudinal axis (9) and thus mixing of the medium components, and preferably **in that** the mixing helix (10) is inserted into the mixing chamber (4).

3. Spraying device according to Claim 2, **characterized in that** the spraying device (1) comprises an insert (11), **in that** the insert (11) is connected separably to the rest of the spraying device (1), **in that** the insert (11) comprises at least part of the mixing chamber (4) and thus in the mounted state receives at least part of the mixing helix (10), and preferably **in that** the insert (11) comprises the medium outlet (5).

4. Spraying device according to Claim 3, **characterized in that** the insert (11) on the one hand and the mixing helix (10) on the other hand are designed in such a way that the mixing helix (10), which is received at least partly by the insert (11), projects at least partly along its longitudinal axis (9) beyond the insert (11) when the insert (11) has been demounted.

5. Spraying device according to one of the preceding claims, **characterized in that** the flow path of the medium components in the mixing chamber (4), seen in the resultant flow direction, is dimensioned to be as short as possible as a function of the reactivity of the medium in order to avoid setting within the mixing chamber (4), and preferably **in that** the mixing chamber (4) is arranged as close as possible to the medium outlet (5) and/or to the medium inlets (2, 3).

6. Spraying device according to one of the preceding claims, **characterized in that** the medium outlet (5) comprises a spraying nozzle for influencing the spraying action.

7. Spraying device according to one of the preceding claims, **characterized in that** an adjustable valve (14, 15) is arranged between the medium inlet (2, 3) and the mixing chamber (4), and **in that** the mixing ratio of the medium components is thus adjustable.

8. Spraying device according to one of the preceding claims, **characterized in that** a first medium component is a bituminous emulsion, and **in that** a second medium component is a reaction liquid which is reactive therewith.

9. Spraying device according to one of the preceding claims, **characterized in that** the subbase is a masonry subbase, a concrete subbase or the like, and **in that** the subbase is preferably formed by wall, floor and/or ceiling surfaces, in particular from the building sector.

10. Spraying system for applying multi-component, preferably two-component, media to a subbase using the spraying method, the spraying system comprising a spraying device (1) and a pumping arrangement, the spraying device (1) being pressurizable with the medium components by means of the pumping arrangement, **characterized in that** the spraying device (1) is designed according to one of the preceding claims.

11. Spraying system according to Claim 10, **characterized in that** the medium inlets (2, 3) of the spraying device (1) can be pressurized by means of the pumping arrangement in each case with a different medium component and at a different pressure.

12. Spraying system according to Claim 10 or 11, **characterized in that** the pumping arrangement comprises a number of pumps, preferably two, and/or **in that** the pumps are coupled to one another mechanically, preferably via coupling elements or via a mechanism, or electrically.

13. Use of a spraying device (1) according to one of Claims 1 to 9 and/or of a spraying system according to one of Claims 10 to 12 for applying multi-component, preferably two-component, in particular reactive media to a subbase using the spraying method, in particular a first medium component being a bituminous emulsion and a second medium component being a reaction liquid which is reactive therewith and/or in particular the subbase being a masonry subbase, a concrete subbase or the like and/or in particular the subbase preferably being formed by wall, floor and/or ceiling surfaces, in particular from the building sector.

## Revendications

1. Pulvérisateur (1) pour l'application de fluides à plusieurs composants, préférentiellement à deux composants, sur une surface dans le cadre d'un procédé de pulvérisation, le pulvérisateur (1) comportant au moins deux et préférentiellement deux entrées de fluide (2, 3) pour les différents composants du fluide à appliquer, les composants du fluide pouvant être mélangés à l'aide du pulvérisateur (1) et appliqués à l'état mélangé sur une surface, le pulvérisateur (1) comportant une chambre de mélange (4) et une sortie de fluide (5), les composants de fluides étant chargés sous pression au niveau des entrées de fluide (2, 3) provoquant ainsi le passage des composants de fluide dans la chambre de mélange (4) et ainsi le mélange des composants de fluide puis finalement l'écoulement du mélange par la sortie de fluides (5), le pulvérisateur (1) comportant une entrée d'air pressurisé (6), la sortie de fluides (5) comportant au moins une buse de sortie d'air (7) reliée à l'entrée d'air pressurisé (6), la buse de sortie d'air (7) permettant de provoquer la pulvérisation du mélange au moyen d'une pression lors de l'écoulement du mélange par la sortie de fluides (5), **caractérisé en ce que** la buse de sortie d'air (7) débouche sur un conduit de sortie placé avant la sortie de fluides (5).

2. Pulvérisateur selon la revendication 1, **caractérisé en ce que** la chambre de mélange (4) comporte une hélice de mélange (10) préférentiellement en matière plastique ou similaire, qui effectue des rotations autour d'un axe longitudinal (9), et **en ce que** le passage dans la chambre de mélange (4) provoque la rotation de l'hélice de mélange (10) autour de son axe longitudinal (9) pour permettre le mélange des composants de fluides, et préférentiellement **en ce que** l'hélice de mélange (10) est intégrée dans la chambre de mélange (4).

3. Pulvérisateur selon la revendication 2, **caractérisé en ce que** le pulvérisateur (1) comporte une garniture (11), la garniture (11) étant reliée au pulvérisateur (1) de façon amovible, la garniture (11) comprenant au moins une partie de la chambre de mélange (4) et admettant au moins une partie de l'hélice de mélange (10) à l'état monté, la garniture (11) comprenant préférentiellement la sortie de fluides (5).

4. Pulvérisateur selon la revendication 3, **caractérisé en ce que** la garniture (11) d'une part et l'hélice de mélange (10) d'autre part sont conçues de telle façon que l'hélice de mélange (10) partiellement comprise dans la garniture (11) dépasse au moins partiellement de la garniture (11) avec son axe longitudinal (9) lorsque la garniture (11) est démontée.

5. Pulvérisateur selon l'une des précédentes revendications, **caractérisé en ce que** la distance d'acheminement du flux de composants de fluides vers la chambre de mélange (4) dans la direction du flux est assez courte, en fonction de la réactivité du fluide pour éviter le durcissement à l'intérieur de la chambre de mélange (4), la chambre de mélange (4) étant préférentiellement placée aussi près que possible de la sortie de fluides (5) et/ou des entrées de fluides (2,3).

6. Pulvérisateur selon l'une des précédentes revendications, **caractérisé en ce que** la sortie de fluides (5) comporte une buse de pulvérisation pour influencer le comportement de pulvérisation.

7. Pulvérisateur selon l'une des précédentes revendications, **caractérisé par** des vannes réglables (14, 15) situées entre les entrées de fluides (2, 3) et la chambre de mélange (4), permettant de régler les proportions du mélange des composants de fluides.

8. Pulvérisateur selon l'une des précédentes revendications, **caractérisé en ce que** le premier composant de fluide est une émulsion de bitume et **en ce qu'**un deuxième composant de fluide est un fluide de réaction réactif.

9. Pulvérisateur selon l'une des précédentes revendications, **caractérisé en ce que** la surface est constituée d'une maçonnerie de surface ou de béton ou autre, et **en ce que** la surface est préférentiellement composée de surfaces de mur ou de sol et/ou de plafond notamment du domaine de la construction.

10. Dispositif de pulvérisation pour l'application de fluides à plusieurs composants, préférentiellement à deux composants, sur une surface dans le cadre d'un procédé de pulvérisation, le dispositif de pulvérisation comprenant un pulvérisateur (1) et un système de pompe, le pulvérisateur (1) pouvant être chargé sous pression avec les composants de fluides au moyen du système de pompe, **caractérisé en ce que** le pulvérisateur (1) est conçu selon l'une des précédentes revendications.

11. Dispositif de pulvérisation selon la revendication 10, **caractérisé en ce que** les entrées de fluides (2, 3) du pulvérisateur (1) peuvent être chargées sous pression avec les différents composants de fluides et avec différentes intensités de pression grâce à un système de pompe.

12. Dispositif de pulvérisation selon les revendications 10 ou 11, **caractérisé en ce que** le système de pompe comporte plusieurs pompes, préférentiellement au nombre de deux, et/ou **en ce que** les pompes sont couplées de façon mécanique, préférentiellement par des éléments de couplage ou par un engrenage ou de façon électrique.

13. Utilisation d'un pulvérisateur (1) selon l'une des revendications 1 à 9 et/ou d'un dispositif de pulvérisation selon l'une des revendications 10 à 12, pour l'application de fluides à plusieurs composants, préférentiellement à deux composants, notamment des fluides réactifs, sur une surface dans le cadre d'un procédé de pulvérisation, notamment avec un premier composant de fluide constitué d'une émulsion de bitume et un deuxième composant de fluide constitué d'un liquide de réaction réactif, et/ou la surface étant constituée de maçonnerie ou de béton ou autres, et/ou la surface étant préférentiellement une surface de mur, de sol ou de plafond, préférentiellement du domaine de la construction.
